# EUROPEAN PATENT SPECIFICATION

(11) **EP 4 428 477 B1**
(45) Date of publication and mention of the grant of the patent: **18.11.2026**
(21) Application number: 24161164.9
(22) Date of filing: 04.03.2024
(51) Int. Cl.: F28D 7/16

(54) **HEAT EXCHANGER AND METHOD OF DETACHING HEAT EXCHANGER END COVER**
WÄRMETAUSCHER UND VERFAHREN ZUM ENTFERNEN DER WÄRMETAUSCHERENDABDECKUNG
ÉCHANGEUR DE CHALEUR ET PROCÉDÉ DE DÉTACHEMENT DE COUVERCLE D'EXTRÉMITÉ D'ÉCHANGEUR DE CHALEUR

(30) Priority: 06.03.2023 CN 202310204941
(43) Date of publication of application: 11.09.2024
(73) Proprietor: Carrier Corporation, Palm Beach Gardens, FL 33418 (US)
(72) Inventor: JIN, Da, Shanghai, 201206 (CN)
(74) Representative: Dehns

(56) References cited:
- AU-B2- 2014 202 472
- CN-A- 112 298 835
- US-A1- 2008 127 565
- US-A1- 2011 017 759
- US-A1- 2023 056 050
- US-B1- 10 180 022

## Description

### FIELD OF THE INVENTION

The present invention relates to the technical field of maintenance tools for heat exchangers, in particular to a heat exchanger and method for detaching an end cover of a heat exchanger.

### BACKGROUND OF THE INVENTION

Refrigeration units often employ multiple heat exchangers, such as falling-film heat exchangers or flooded heat exchangers. A common falling-film heat exchanger or flooded heat exchanger includes a cylindrical housing and end covers at both ends. The heat exchange tube bundle is arranged in the space inside the housing, and chilled/cooling water (or other media) enter the heat exchange tube bundle through the end covers to exchange heat with the refrigerant circulating on the housing side. In order to keep good heat exchange performance, it is necessary to regularly maintain the heat exchanger, where at this point the end cover needs to be detached. If the heat exchanger malfunctions, usually it is also necessary to detach the end cover. However, the end cover is relatively heavy. At present, a third party needs to be deployed for removal and hoisting of the end cover during maintenance or repair, or special tools need to be used, where these special tools may only be applicable for certain types of end covers and thus may not have universal applicability. US 10,180,022 B1 discloses a hinge assembly for supporting a blind flange used in various piping systems in the oil industry, heat exchangers, ships, tanks, and the like. US 2023/056050 A1 discloses a double pivot hinge for an electrical cabinet, where the hinge comprises a housing mount for connecting to the housing of the storage unit, a cover mount for connecting to the cover of the storage unit, and a pivoting member for coupling the housing mount and the cover mount together. US 2011/017759 A1 discloses a manway cover separating kit and method for its use, the kit comprising at least one extended length cover supporting rod having end stops at each end, wherein at least one of the end stops is removeable, the rod being adapted for positioning within one of a plurality of manway cover bolt openings and for maintaining alignment of the manway cover and a manway flange, where the manway flange and the manway cover are separated by way of rotatably connected plates.

### SUMMARY OF THE INVENTION

Embodiments of the present invention aim to solve or at least alleviate the problems existing in the prior art.

According to one aspect, heat exchanger is provided, comprising: an end flange; an end cover mounted to the end flange; at least a first hinge device and a second hinge device, wherein the first hinge device and the second hinge device are mounted between the end flange and the end cover at a first position and a second position on a same axis, the first hinge device and the second hinge devices each comprising: a base, fixedly connected to the end flange; a rotating member, fixedly connected to the end cover; and a connecting member, detachably connected to the base and the rotating member, so that the rotating member is capable of rotating along said same axis relative to the base, and an abutting bolt which passes through a threaded hole of the base and is configured to press against an edge of the end flange or to press against one or more spacers arranged between the edge of the end flange and the base.

Optionally, the base comprises a first mounting hole connected to a first bolt hole on a back side of the end flange through a first bolt, and the rotating member comprises a second mounting hole connected to a second bolt hole on the end cover through a second bolt, wherein, the first bolt hole and the second bolt hole are corresponding to each other in terms of position, and are originally used to receive a mounting bolt for fastening the end cover to the end cover flange.

Optionally, said same axis is a vertical axis, wherein, the base has a first pin hole, the rotating member includes a second pin hole, and the connecting member is a pin that passes through the first pin hole and the second pin hole, where the pin is inserted along the vertical axis into the first pin hole and the second pin hole aligned with each other. Optionally, the pin comprises a cylindrical body, where a head larger in size than the cylindrical body is provided at a first end of the cylindrical body, and a through hole for installing a lock pin is provided at a second end of the cylindrical body.

Optionally, the one or more spacers include an L-shaped spacer comprising a first plane portion and a second plane portion that are perpendicular to each other, where the first plane portion is arranged on the base, and the second plane portion is arranged between the base and the edge of the end flange.

Optionally, the base comprises a back plate and a bending portion. The bending portion comprises the first pin hole and the threaded hole, where the orientation of the pin hole and that of the threaded hole are perpendicular to each other, the back plate comprises the first mounting hole, and the rotating member comprises a rotating member body and a boss at one end of the rotating member body, where the boss comprises the second pin hole.

Optionally, the heat exchanger comprises a plurality of support bolts for replacing a part of the mounting bolts connected between the end cover and the end flange, so as to be connected between the end cover and the end flange when detaching all mounting bolts. The length of the plurality of support bolts is configured so that the end cover, when supported by the support bolts, can be translated along the length direction of the support bolts relative to the end flange to a position where the gap between the end cover and the end flange is at least greater than 1cm. Optionally, the plurality of support bolts include at least three support bolts.

Optionally, the heat exchanger comprises a lock member configured to lock the first hinge device and the second hinge device at a position where the end cover rotates and opens for at least 120 degrees relative to the end cover flange. Optionally, the lock member can be detachably connected to the first hinge device and the second hinge device. Optionally, the lock member is a U-shaped pin, and the base and the rotating member each includes a lock pin hole.

According to another aspect, a method for detaching an end cover of a heat exchanger is also provided, wherein the heat exchanger comprises an end flange and the end cover is mounted to the end flange, the method comprising:
selecting a first position and a second position on the same axis close to an edge of an end flange;
connecting bases of the first hinge device and the second hinge device to the end flange at the first position and the second position;
connecting rotating members of the first hinge device and the second hinge device to the end cover at the first position and the second position;
connecting, using connecting members, the bases and rotating members of the first hinge device and the second hinge device; and rotating the rotating members of the first hinge device and the second hinge device along with the end cover along said same axis as to open the end cover.
The method further comprises passing an abutting bolt through a threaded hole of the base to press against the edge of the end flange, or to press against one or more spacers arranged between the edge of the end flange and the base.

Optionally, the steps of connecting the rotating member to the end cover further comprise:
replacing a part of the mounting bolts that connect the end cover and the end flange with a plurality of support bolts and detaching the remaining mounting bolts;
translating the end cover along the length direction of the support bolts relative to the end flange, so that the gap between the end cover and the end flange is greater than 1cm; and
arranging nuts in the gap, and connecting the rotating members to the end covers using bolts and nuts.

Optionally, the method further comprises: locking the rotation of the rotating member relative to the base in the first hinge device and/or the second hinge device after the end cover is opened for more than 120 degrees.

The device and method according to the embodiments of the present invention facilitate the disassembly and assembly of the heat exchanger end cover.

### BRIEF DESCRIPTION OF THE DRAWINGS

With reference to the accompanying drawings, the disclosure of the present invention will become easier to understand. Those skilled in the art would easily understand that these drawings are for the purpose of illustration and example only, and are not intended to limit the protection scope of the present application. In addition, in the figures, similar numerals are used to denote similar components, where:
FIG. 1 shows a front side perspective view of the end of a heat exchanger;
FIG. 2 shows a rear side perspective view of a heat exchanger end;
FIG. 3 shows a front side perspective view of a heat exchanger end;
FIG. 4 shows a front side perspective view of a heat exchanger end;
FIG. 5 shows an enlarged view of region A in FIG. 4;
FIG. 6 shows a front side perspective view of a heat exchanger end;
FIG. 7 shows a top side perspective view of a heat exchanger end when the end cover is opened; and
FIG. 8 shows an enlarged view of a hinge device of a tool kit of a heat exchanger end when the end cover is opened.

### DETAILED DESCRIPTION OF EMBODIMENT(S) OF THE INVENTION

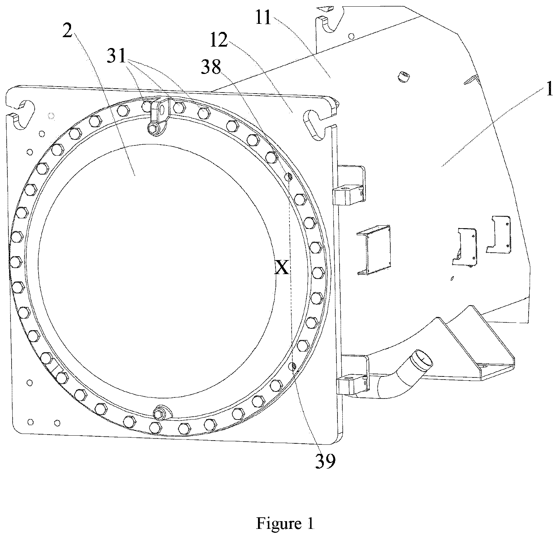

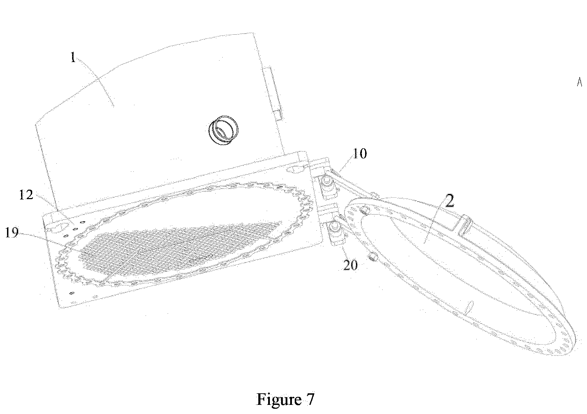

FIG. 1 illustrates the structure of a common heat exchanger end. Heat exchanger 1 generally comprises a cylindrical housing 11, an end flange 12 at the end of housing 11, and an end cover 2 connected to the end flange 12. The end cover 2 can be connected to the end flange 12 of the housing 11 through a plurality of mounting bolts 31 distributed along the circumference. Coils 19 of the heat exchanger (FIG. 7) are arranged inside the housing 11. When maintenance is required inside the housing 11, the end cover 2 needs to be detached. However, since the end cover 2 is heavy and the heat exchanger may be installed in a high position, suitable tool kits need to be provided for detaching.

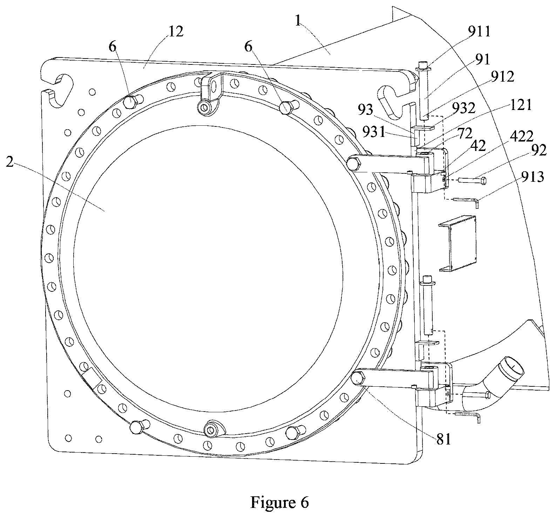

Referring now to FIGS. 6 to 8, a heat exchanger is to be described. The heat exchanger at least comprises: a first hinge device 10 and a second hinge device 20. The first hinge device 10 and the second hinge device 20 may have the same or similar structure. The following description will mainly focus on the first hinge device 10. The first hinge device comprises a base 4, which can be fixedly connected to the end flange 12; a rotating member 7, which can be fixedly connected to the end cover 2; and a connecting member 91, which can be detachably connected to the base 4 and the rotating member 7, so that the rotating member 7 can rotate relative to the base 4. By selecting specific positions to install the two hinge devices, the end cover 2 can be rotated and opened.

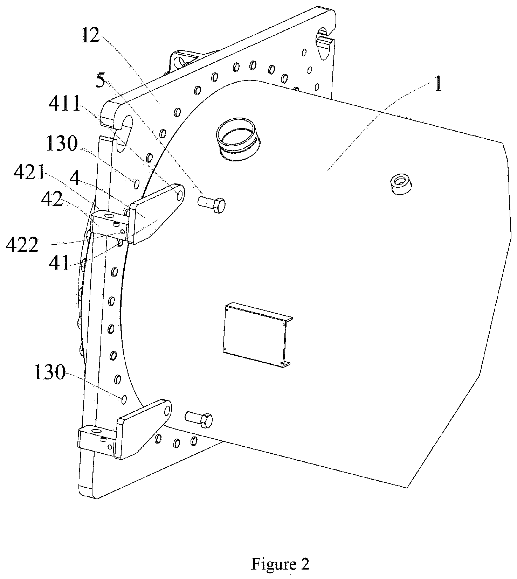

As shown in FIG. 1, a first position 38 and a second position 39 that are on the same axis X and with an appropriate distance (based the length of the base 4) to the edge of the end flange 12 can be selected from the positions where the plurality of mounting bolts 31 that connect the end cover 2 and the end flange 12 are located, and the mounting bolts at the first position 38 and the second position 39 are detached. And, the bolt holes of the end cover flange 12 and the end cover 2 at the first position 38 and the second position 39 are used to connect the bases 4 and rotating members 7 of the hinge devices. The axis X can be, for example, a vertical axis or a substantially vertical axis. Specifically, as shown in FIG. 2, the end cover flange 12 comprises a first bolt hole 130 on the end cover flange 12 corresponding to the first position 38 in FIG. 1, the base 4 comprises a first mounting hole 411 to connect the first bolt hole 130 from the back side of the end flange 12 through a first bolt 5, and the rotating member 7 comprises a second mounting hole to connect to a second bolt hole 230 on the end cover 2 corresponding to the first position 38 in FIG. 1 through a second bolt 81. The first bolt hole 130 and the second bolt hole 230 are corresponding to each other in terms of position, and are originally intended to receive a mounting bolt 31. The first bolt hole 130 on the end cover flange 12 has internal threads, where these internal threads themselves are used to engage with the mounting bolt 31. Therefore, the first bolt 5 can also be directly threaded to the first bolt hole 130 on the end cover flange 12. In some embodiments, the second bolt hole 230 on the end cover 2 may not have internal threads. At this point, a nut 82 needs to be inserted between the end cover flange 12 and the end cover 2 to receive the second bolt 81. On the other hand, both the length of the first bolt 5 and that of the second bolt 81 should be appropriately designed to avoid being too long. For example, the length of the first bolt 5 should be configured not to exceed the end cover flange 12 when tightened, and the second bolt 81 when tightened should be configured not to exceed or slightly exceed the nut 82 which is tightly attached to the end cover 2.

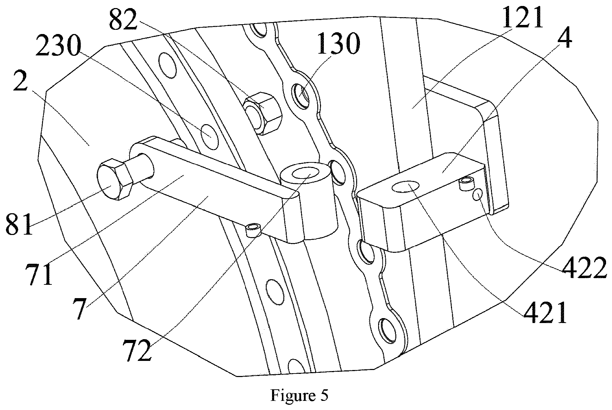

With continued with reference to FIGS. 5 to 8, the base 4 has a first pin hole 421, the rotating member 7 comprises a second pin hole 72, the connecting member 91 is a pin that passes through the first pin hole 421 and the second pin hole 72 along the axis X. The pin comprises a cylindrical body, where a head 911 with a size larger than the cylindrical body is provided at the first end of the cylindrical body, and a through hole 912 for installing a lock pin 913 is provided at the second end of the cylindrical body. The base 4 comprises a back plate 41 and a bending portion 42, where a first pin hole 421 is defined in the bending portion 42, and the back plate 41 includes the first mounting hole 411. The rotating member 7 comprises a rotating member body 71 and a boss at one end of the rotating member body 71, where a second pin hole 72 is defined in the boss. During assembly, the boss of the rotating member is located above the bending portion 42 of the base 4, with the second pin hole 72 being aligned with the first pin hole 421. The connecting member 91 can be directly inserted into the aligned through-hole from top to bottom along the axis X, with its head 911 at the first end supported by the boss of the rotating member. Then, a lock pin 913, for example in L-shaped, is inserted into the through-hole 912 at the second end of the connecting member 91 to prevent the connecting member 91 from coming out.

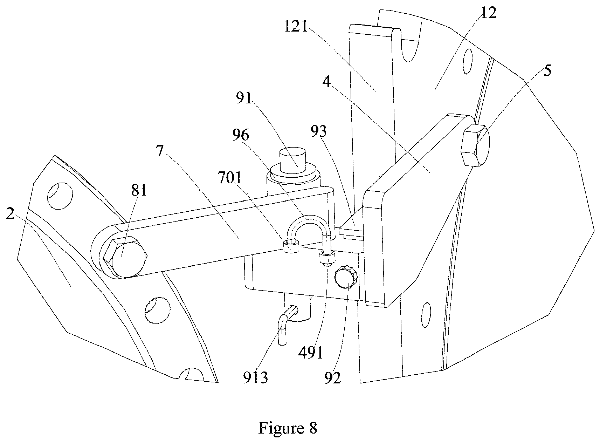

The heat exchanger further comprises an abutting bolt 92, which is used to pass through a threaded hole 422 on the base 4 to press against the edge 121 of the end flange 12 (see FIG. 8) or optional one or more spacers 93. Therefore, the heat exchanger may further comprise one or more spacers 93. It should be appreciated that when selecting the two mounting positions 38 and 39 shown in FIG. 1, full consideration should be taken to the mounting of the base 4, so that the gap between the bending portion 42 of the base 4 and the edge 121 of the end flange 12 is as small as possible, for example, less than 15mm. However, even so, when the gap is greater than 5mm, the spacer 93 can be inserted into the above gap, so that the abutting bolt 2 comes into contact with the spacer 93 and presses the spacer 93 against the edge 121 of end flange 12, thus securing the stable installation of base 4. One or more spacers include an L-shaped spacer comprising a first plane portion 931 and a second plane portion 932 perpendicular to each other. The first plane portion 931 is supported by the bending portion 42 of the base, the second plane portion 932 is provided between the bending portion 42 of the base and the edge 121 of the end flange, and the abutting bolt presses against the second plane portion 932.

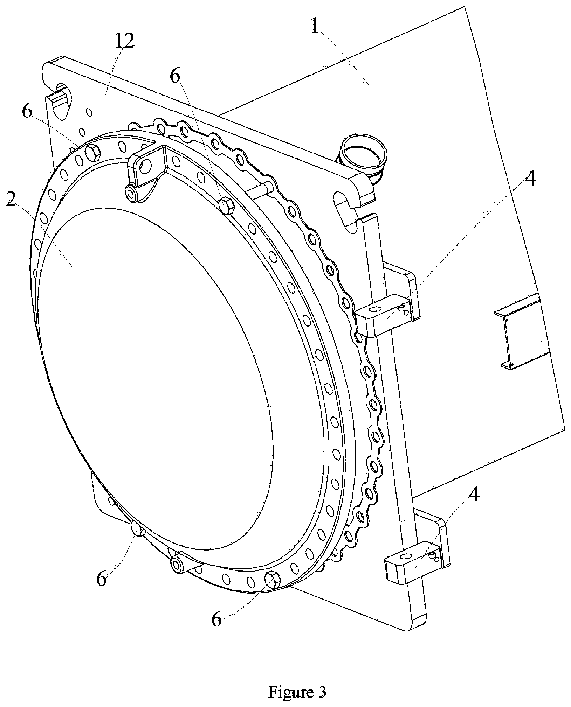

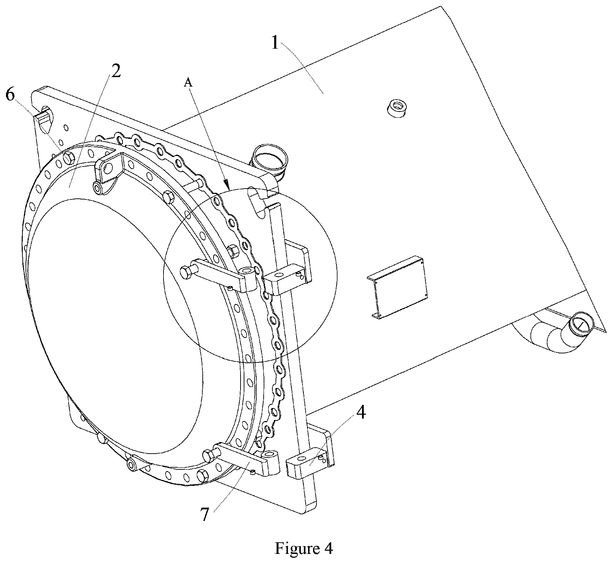

With continued reference to FIGS. 3 to 5, the heat exchanger further comprises a plurality of support bolts 6, which are used to replace a part of the mounting bolts 31 connected between the end cover 2 and the end flange 12, so as to be connected between the end cover 2 and the end flange 12. As shown in FIG. 3, four support bolts 6 are used in this embodiment, and the four support bolts 6 form the four corners of a rectangle, so that the end cover 2 can be stably supported. The length of the plurality of support bolts 6 is greater than that of the mounting bolts 31, which is configured so that the end cover 2, when supported by the support bolts 6, can be translated along the length direction of the support bolts 6 relative to the end flange 12 to a position where the gap between the end cover and the end flange is at least greater than 1cm. Through this translation, a nut 82 can be inserted into the gap. It should be appreciated that the number and positions of the plurality of support bolts 6 can be changed as long as the end cover 2 can be stably supported. For example, only three support bolts can be provided or more support bolts can be provided. When the assembly of the first hinge device 10 and the second hinge device 20 is completed, the support bolts 6 can be detached. And, as shown in FIG. 7, the end cover 2 can be opened along the axis X of the first hinge device 10 and the second hinge device 20 for maintenance inside the heat exchanger. After the maintenance is completed, the end cover 2 can be reinstalled only by rotating the end cover 2 and performing the above steps in reverse order.

As shown in FIG. 8, the heat exchanger further comprises a lock member 96, which can lock the first hinge device and the second hinge device at a position where the end cover rotates and opens for at least 120 degrees relative to the end cover flange, making it convenient for the maintenance work inside the heat exchanger. In the illustrated embodiment, the lock member 96 is an external component detachably connected to the first hinge device and the second hinge device. Alternatively, the lock member 96 can be a part of the base 4, the rotating member 7, or the connecting member 91. The lock member 96 is a U-shaped pin, and the base 4 and the rotating member 7 comprise lock pin holes 491, 701, respectively. The U-shaped pin can be inserted into the lock pin holes 491, 701 included in the base 4 and the rotating member 7 when the hinge devices are opened to a specific angle, so as to prevent movement of the end cover 2, thus facilitating the maintenance work.

Referring further to FIGS. 1 to 8, a method for detaching an end cover of a heat exchanger is described. The method comprises: selecting a first position 38 and a second position 39 on the same axis X close to an edge 121 of an end flange 12; connecting bases 4 of a first hinge device 10 and a second hinge device 20 to the end flange 12 at the first position 38 and the second position 39; connecting rotating members 7 of the first hinge device and the second hinge device to an end cover 2 at the first position 38 and the second position 39; connecting, using connecting members 91, the bases 4 and the rotating members 7 of the first hinge device and the second hinge device; and rotating the rotating members of the first hinge device and the second hinge device along with the end cover 2 along said same axis X to open the end cover 2. In some embodiments, the step of connecting the rotating members to the end cover further comprises: replacing part of the mounting bolts that connect the end cover and the end flange with a plurality of support bolts, and then detaching the remaining mounting bolts; translating the end cover along the length direction of the support bolts relative to the end flange, so that a gap between the end cover and the end flange is greater than 1cm; and arranging the nuts in the gap and connecting the rotating members to the end cover using bolts and the nuts. In some embodiments, the method further comprises: locking the rotation of the rotating member relative to the base after the end cover is opened for more than 120 degrees. Although not shown, after the maintenance work is completed, the assembly of the end cover 2 can be completed by detaching the lock members 96, closing the end cover 2, mounting the support bolts 6, detaching the connecting members 91, bases 4 and rotating members 7, and reinstalling the mounting bolts 31.

It can be seen from the above description that the heat exchanger has a simple structure and low cost, and can be operated by a single maintenance worker. In addition, the entire operation process, whether disassembly or installation, does not require hoisting of the end cover. In addition, the invention is applicable to various types of heat exchangers. Therefore, the heat exchanger and method have advantages including but not limited to: no need for hoisting facilities, strong adaptability, simple operation, and low cost.

The specific embodiments described above are merely intended to describe the principles of the present invention more clearly, wherein various components are clearly shown or described to facilitate the understanding of the principles of the present invention. Those skilled in the art may, without departing from the scope of the present invention as defined in the appended claims, make various modifications or changes to the specific embodiments. Therefore, it should be understood that these modifications or changes should be included within the scope of patent protection of the present invention defined in the appended claims.

## Claims

1. A heat exchanger comprising:
an end flange (12);
an end cover (2) mounted to the end flange;
at least a first hinge device (10) and a second hinge device (20), wherein the first hinge device and the second hinge device are mounted between the end flange and the end cover at a first position (38) and a second position (39) on a same axis (X), the first hinge device and the second hinge devices each comprising:
a base (4), fixedly connected to the end flange;
a rotating member (7), fixedly connected to the end cover; and
a connecting member (91), detachably connected to the base and the rotating member, so that the rotating member is capable of rotating along said same axis relative to the base, and
an abutting bolt (92) which passes through a threaded hole (422) of the base (4) and is configured to press against an edge (121) of the end flange (12) or to press against one or more spacers (93) arranged between the edge of the end flange and the base.

2. The heat exchanger (1) according to claim 1, wherein the base (4) comprises a first mounting hole (411) connected to a first bolt hole (130) on a back side of the end flange (12) through a first bolt (5), and the rotating member (7) comprises a second mounting hole connected to a second bolt hole (230) on the end cover (2) through a second bolt (81).

3. The heat exchanger according to claim 2, wherein the first bolt hole and the second bolt hole are corresponding to each other in terms of position, and are originally used to receive a mounting bolt (31) for fastening the end cover to the end flange.

4. The heat exchanger (1) according to any one of claims 1-3, wherein said same axis (X) is a vertical axis, wherein, the base (4) has a first pin hole (421), the rotating member (7) comprises a second pin hole (72), and the connecting member (91) is a pin that passes through the first pin hole and the second pin hole, where the pin is inserted along the vertical axis into the first pin hole and the second pin hole aligned with each other.

5. The heat exchanger according to claim 4, wherein the pin comprises a cylindrical body, where a head (911) larger in size than the cylindrical body is provided at a first end of the cylindrical body, and a through hole (912) for installing a lock pin (913) is provided at a second end of the cylindrical body.

6. The heat exchanger (1) according to any of claims 1-5, where the one or more spacers include an L-shaped spacer comprising a first plane portion (931) and a second plane portion (932) that are perpendicular to each other, where the first plane portion is arranged on the base, and the second plane portion is arranged between the base and the edge of the end flange.

7. The heat exchanger (1) according to any preceding claim, wherein the base (4) comprises a back plate (41) and a bending portion (42), where the bending portion comprises the first pin hole (421) and the threaded hole (422), orientation of the pin hole and that of the threaded hole being perpendicular to each other, the back plate comprises the first mounting hole (411), and the rotating member (7) comprises a rotating member body (71) and a boss at one end of the rotating member body, the boss comprising the second pin hole (72).

8. The heat exchanger (1) according to any of claims 1-7, comprising a plurality of support bolts (6) for replacing a part of mounting bolts (31) connected between the end cover (2) and the end flange (12), so as to be connected between the end cover and the end flange when detaching all mounting bolts, where a length of the plurality of support bolts is configured so that the end cover, when supported by the support bolts, is configured to be translated along a length direction of the support bolts relative to the end flange to a position where a gap between the end cover and the end flange is at least greater than 1cm.

9. The heat exchanger according to claim 8, wherein the plurality of support bolts includes at least three support bolts.

10. The heat exchanger (1) according to any of claims 1-6, wherein the tool kit further comprises a lock member (96) configured to lock the first hinge device (10) and the second hinge device (20) at a position where the end cover (2) rotates and opens for at least 120 degrees relative to the end flange (12).

11. The heat exchanger according to claim 10, wherein the lock member is configured to be detachably connected to the first hinge device and the second hinge device.

12. The heat exchanger according to claim 10, wherein the lock member is a U-shaped pin, and the base (4) and the rotating member (7) each include a lock pin hole (491, 701).

13. A method for detaching an end cover (2) of a heat exchanger (1), wherein the heat exchanger comprises an end flange (12) and the end cover (2) is mounted to the end flange, the method comprising:
selecting a first position (38) and a second position (39) on a same axis (X) close to an edge (121) of an end flange (12);
connecting bases (4) of a first hinge device (10) and a second hinge device (20) to the end flange at the first position and the second position;
connecting rotating members (7) of the first hinge device and the second hinge device to the end cover at the first position and the second position;
connecting, using connecting members (91), the bases and rotating members of the first hinge device and the second hinge device; and
rotating the rotating members of the first hinge device and the second hinge device along with the end cover along said same axis to open the end cover,
wherein the method further comprises passing an abutting bolt (92) through a threaded hole (422) of the base (4) to press against an edge (121) of the end flange (12), or to press against one or more spacers (93) arranged between the edge of the end flange and the base.

14. The method according to claim 13, wherein the step of connecting the rotating member (7) to the end cover (2) further comprises:
replacing a part of mounting bolts (31) that connect the end cover and the end flange with a plurality of support bolts (6), and detaching remaining mounting bolts;
translating the end cover along a length direction of the support bolts relative to the end flange (12), so that a gap between the end cover and the end flange is greater than 1cm; and
arranging nuts (82) in the gap and connecting the rotating members to the end cover using bolts and the nuts.

15. The method according to claim 13 or 14, wherein the method further comprises: locking rotation of the rotating member (7) of the first hinge device (10) and/or the second hinge device (20) relative to the base (4) after the end cover (2) is opened by more than 120 degrees.

## Patentansprüche

1. Wärmetauscher, umfassend:
einen Endflansch (12);
eine am Endflansch befestigte Endabdeckung (2);
mindestens eine erste Scharniervorrichtung (10) und eine zweite Scharniervorrichtung (20), wobei die erste Scharniervorrichtung und die zweite Scharniervorrichtung zwischen dem Endflansch und der Endabdeckung an einer ersten Position (38) und einer zweiten Position (39) auf derselben Achse (X) befestigt sind, wobei die erste Scharniervorrichtung und die zweite Scharniervorrichtung jeweils Folgendes umfassen:
eine Basis (4), die fest mit dem Endflansch verbunden ist;
ein Drehelement (7), das fest mit der Endabdeckung verbunden ist; und
ein Verbindungselement (91), das lösbar mit der Basis und dem Drehelement verbunden ist, so dass das Drehelement in der Lage ist, sich entlang derselben Achse relativ zur Basis zu drehen, und
eine anliegende Schraube (92), die durch ein Gewindeloch (422) der Basis (4) hindurchgeht und dazu konfiguriert ist, gegen eine Kante (121) des Endflansches (12) oder gegen einen oder mehrere Abstandshalter (93) zu drücken, die zwischen der Kante des Endflansches und der Basis angeordnet sind.

2. Wärmetauscher (1) nach Anspruch 1, wobei die Basis (4) ein erstes Befestigungsloch (411) umfasst, das über eine erste Schraube (5) mit einem ersten Schraubenloch (130) an der Rückseite des Endflansches (12) verbunden ist, und das Drehelement (7) ein zweites Befestigungsloch umfasst, das über eine zweite Schraube (81) mit einem zweiten Schraubenloch (230) an der Endabdeckung (2) verbunden ist.

3. Wärmetauscher nach Anspruch 2, wobei das erste Schraubenloch und das zweite Schraubenloch hinsichtlich ihrer Position einander entsprechen und ursprünglich verwendet werden, um eine Befestigungsschraube (31) zur Anbringung der Endabdeckung am Endflansch aufzunehmen.

4. Wärmetauscher (1) nach einem der Ansprüche 1-3, wobei die gleiche Achse (X) eine vertikale Achse ist, wobei die Basis (4) ein erstes Stiftloch (421) aufweist, das Drehelement (7) ein zweites Stiftloch (72) umfasst und das Verbindungselement (91) ein Stift ist, der durch das erste Stiftloch und das zweite Stiftloch hindurchgeht, wobei der Stift entlang der vertikalen Achse in das erste Stiftloch und das zweite Stiftloch eingeführt wird, die zueinander ausgerichtet sind.

5. Wärmetauscher nach Anspruch 4, wobei der Stift einen zylindrischen Körper umfasst, wobei an einem ersten Ende des zylindrischen Körpers ein Kopf (911) bereitgestellt ist, der größer ist als der zylindrische Körper, und an einem zweiten Ende des zylindrischen Körpers ein Durchgangsloch (912) zum Einsetzen eines Sicherungsstifts (913) bereitgestellt ist.

6. Wärmetauscher (1) nach einem der Ansprüche 1-5, wobei der eine oder die mehreren Abstandshalter einen L-förmigen Abstandshalter beinhalten, der einen ersten ebenen Abschnitt (931) und einen zweiten ebenen Abschnitt (932) umfasst, die senkrecht zueinander stehen, wobei der erste ebene Abschnitt auf der Basis angeordnet ist und der zweite ebene Abschnitt zwischen der Basis und der Kante des Endflansches angeordnet ist.

7. Wärmetauscher (1) nach einem der vorhergehenden Ansprüche, wobei die Basis (4) eine Rückplatte (41) und einen Biegeabschnitt (42) umfasst, wobei der Biegeabschnitt das erste Stiftloch (421) und das Gewindeloch (422) umfasst, wobei die Ausrichtung des Stiftlochs und die des Gewindelochs senkrecht zueinander steht, die Rückplatte das erste Befestigungsloch (411) umfasst und das Drehelement (7) einen Drehelementkörper (71) und einen Ansatz an einem Ende des Drehelementkörpers umfasst, wobei der Ansatz das zweite Stiftloch (72) umfasst.

8. Wärmetauscher (1) nach einem der Ansprüche 1-7, umfassend eine Vielzahl von Stützschrauben (6) zum Ersetzen eines Teils der Befestigungsschrauben (31), die zwischen der Endabdeckung (2) und dem Endflansch (12) verbunden sind, sodass sie beim Lösen aller Befestigungsschrauben zwischen der Endabdeckung und dem Endflansch verbunden sind, wobei eine Länge der Vielzahl von Stützschrauben so konfiguriert ist, dass die Endabdeckung, wenn sie von den Stützschrauben gestützt wird, dazu konfiguriert ist, entlang einer Längsrichtung der Stützschrauben relativ zum Endflansch in eine Position verschoben zu werden, in der ein Spalt zwischen der Endabdeckung und dem Endflansch mindestens größer als 1 cm ist.

9. Wärmetauscher nach Anspruch 8, wobei die Vielzahl von Stützschrauben mindestens drei Stützschrauben beinhaltet.

10. Wärmetauscher (1) nach einem der Ansprüche 1-6, wobei der Werkzeugsatz ferner ein Verriegelungselement (96) umfasst, das dazu konfiguriert ist, die erste Scharniervorrichtung (10) und die zweite Scharniervorrichtung (20) in einer Position zu verriegeln, in der sich die Endabdeckung (2) um mindestens 120 Grad relativ zum Endflansch (12) dreht und öffnet.

11. Wärmetauscher nach Anspruch 10, wobei das Verriegelungselement dazu konfiguriert ist, lösbar mit der ersten Scharniervorrichtung und der zweiten Scharniervorrichtung verbunden zu sein.

12. Wärmetauscher nach Anspruch 10, wobei das Verriegelungselement ein U-förmiger Stift ist und die Basis (4) und das Drehelement (7) jeweils ein Verriegelungsstiftloch (491, 701) beinhalten.

13. Verfahren zum Entfernen einer Endabdeckung (2) eines Wärmetauschers (1), wobei der Wärmetauscher einen Endflansch (12) umfasst und die Endabdeckung (2) am Endflansch befestigt ist, wobei das Verfahren Folgendes umfasst:
Auswählen einer ersten Position (38) und einer zweiten Position (39) auf derselben Achse (X) in der Nähe einer Kante (121) eines Endflansches (12);
Verbinden von Basen (4) einer ersten Scharniervorrichtung (10) und einer zweiten Scharniervorrichtung (20) mit dem Endflansch an der ersten und der zweiten Position;
Verbinden von Drehelementen (7) der ersten Scharniervorrichtung und der zweiten Scharniervorrichtung mit der Endabdeckung an der ersten und der zweiten Position;
Verbinden der Basen und Drehelemente der ersten Scharniervorrichtung und der zweiten Scharniervorrichtung unter Verwendung von Verbindungselementen (91); und
Drehen der Drehelemente der ersten Scharniervorrichtung und der zweiten Scharniervorrichtung zusammen mit der Endabdeckung entlang derselben Achse, um die Endabdeckung zu öffnen,
wobei das Verfahren ferner Hindurchgehen einer anliegenden Schraube (92) durch ein Gewindeloch (422) der Basis (4) umfasst, um gegen eine Kante (121) des Endflansches (12) oder gegen einen oder mehrere Abstandshalter (93) zu drücken, die zwischen der Kante des Endflansches und der Basis angeordnet sind.

14. Verfahren nach Anspruch 13, wobei der Schritt des Verbindens des Drehelements (7) mit der Endabdeckung (2) ferner Folgendes umfasst:
Ersetzen eines Teils der Befestigungsschrauben (31), die die Endabdeckung und den Endflansch verbinden, durch eine Vielzahl von Stützschrauben (6) und Entfernen der verbleibenden Befestigungsschrauben;
Verschieben der Endabdeckung entlang einer Längsrichtung der Stützschrauben relativ zum Endflansch (12), so dass ein Spalt zwischen der Endabdeckung und dem Endflansch größer als 1 cm ist; und
Anordnen von Muttern (82) in dem Spalt und Verbinden der Drehelemente mit der Endabdeckung unter Verwendung von Schrauben und den Muttern.

15. Verfahren nach Anspruch 13 oder 14, wobei das Verfahren ferner Folgendes umfasst: Verriegeln der Drehung des Drehelements (7) der ersten Scharniervorrichtung (10) und/oder der zweiten Scharniervorrichtung (20) relativ zur Basis (4), nachdem die Endabdeckung (2) um mehr als 120 Grad geöffnet wurde.

## Revendications

1. Échangeur de chaleur comprenant :
une bride d'extrémité (12) ;
un couvercle d'extrémité (2) monté sur la bride d'extrémité ;
au moins un premier dispositif de charnière (10) et un second dispositif de charnière (20), le premier dispositif de charnière et le second dispositif de charnière étant montés entre la bride d'extrémité et le couvercle d'extrémité au niveau d'une première position (38) et d'une seconde position (39) sur un même axe (X), le premier dispositif de charnière et le second dispositif de charnière comprenant chacun :
une base (4), reliée à demeure à la bride d'extrémité ;
un élément rotatif (7), relié à demeure au couvercle d'extrémité ; et
un élément de liaison (91), relié de manière amovible à la base et à l'élément rotatif, de sorte que l'élément rotatif est apte à entrer en rotation autour dudit même axe par rapport à la base, et
un boulon de butée (92) qui passe à travers un trou fileté (422) de la base (4) et est configuré pour presser contre un bord (121) de la bride d'extrémité (12) ou pour presser contre une ou plusieurs entretoises (93) agencées entre le bord de la bride d'extrémité et la base.

2. Échangeur de chaleur (1) selon la revendication 1, dans lequel la base (4) comprend un premier trou de montage (411) relié à un premier trou de boulon (130) sur un côté arrière de la bride d'extrémité (12) par le biais d'un premier boulon (5), et l'élément rotatif (7) comprend un second trou de montage relié à un second trou de boulon (230) sur le couvercle d'extrémité (2) par le biais d'un second boulon (81).

3. Échangeur de chaleur selon la revendication 2, dans lequel le premier trou de boulon et le second trou de boulon sont en correspondance l'un avec l'autre en termes de position, et sont initialement utilisés pour recevoir un boulon de montage (31) pour fixer le couvercle d'extrémité à la bride d'extrémité.

4. Échangeur de chaleur (1) selon l'une quelconque des revendications 1 à 3, dans lequel ledit même axe (X) est un axe vertical, dans lequel la base (4) a un premier trou de goupille (421), l'élément rotatif (7) comprend un second trou de goupille (72), et l'élément de liaison (91) est une goupille qui passe à travers le premier trou de goupille et le second trou de goupille, où la goupille est insérée le long de l'axe vertical dans le premier trou de goupille et le second trou de goupille alignés l'un sur l'autre.

5. Échangeur de chaleur selon la revendication 4, dans lequel la goupille comprend un corps cylindrique, où une tête (911) de taille supérieure à celle du corps cylindrique est fournie au niveau d'une première extrémité du corps cylindrique, et un trou traversant (912) pour installer une goupille de verrouillage (913) est fourni au niveau d'une seconde extrémité du corps cylindrique.

6. Échangeur de chaleur (1) selon l'une quelconque des revendications 1 à 5, dans lequel les une ou plusieurs entretoises comportent une entretoise en forme de L comprenant une première partie plane (931) et une seconde partie plane (932) qui sont perpendiculaires l'une à l'autre, la première partie plane étant agencée sur la base et la seconde partie plane étant agencée entre la base et le bord de la bride d'extrémité.

7. Échangeur de chaleur (1) selon une quelconque revendication précédente, dans lequel la base (4) comprend une plaque arrière (41) et une partie de flexion (42), où la partie de flexion comprend le premier trou de goupille (421) et le trou fileté (422), une orientation du trou de goupille et celle du trou fileté étant perpendiculaires l'une à l'autre, la plaque arrière comprend le premier trou de montage (411), et l'élément rotatif (7) comprend un corps d'élément rotatif (71) et un bossage au niveau d'une extrémité du corps d'élément rotatif, le bossage comprenant le second trou de goupille (72).

8. Échangeur de chaleur (1) selon l'une quelconque des revendications 1 à 7, comprenant une pluralité de boulons de support (6) pour remplacer une partie des boulons de montage (31) reliés entre le couvercle d'extrémité (2) et la bride d'extrémité (12), de manière à être reliés entre le couvercle d'extrémité et la bride d'extrémité lors du retrait de tous les boulons de montage, où une longueur de la pluralité de boulons de support est configurée de sorte que le couvercle d'extrémité, lorsqu'il est supporté par les boulons de support, est configuré pour être déplacé en translation le long d'une direction longitudinale des boulons de support par rapport à la bride d'extrémité jusqu'à une position où un écart entre le couvercle d'extrémité et la bride d'extrémité est au moins supérieur à 1 cm.

9. Échangeur de chaleur selon la revendication 8, dans lequel la pluralité de boulons de support comporte au moins trois boulons de support.

10. Échangeur de chaleur (1) selon l'une quelconque des revendications 1 à 6, dans lequel le kit d'outils comprend en outre un élément verrou (96) configuré pour verrouiller le premier dispositif de charnière (10) et le second dispositif de charnière (20) au niveau d'une position où le couvercle d'extrémité (2) entre en rotation et s'ouvre d'au moins 120 degrés par rapport à la bride d'extrémité (12).

11. Échangeur de chaleur selon la revendication 10, dans lequel l'élément verrou est configuré pour être relié de manière détachable au premier dispositif de charnière et au second dispositif de charnière.

12. Échangeur de chaleur selon la revendication 10, dans lequel l'élément verrou est une goupille en forme de U, et la base (4) et l'élément rotatif (7) comportent chacun un trou de goupille de verrou (491, 701).

13. Procédé de détachement d'un couvercle d'extrémité (2) d'un échangeur de chaleur (1), dans lequel l'échangeur de chaleur comprend une bride d'extrémité (12) et le couvercle d'extrémité (2) est monté sur la bride d'extrémité, le procédé comprenant :
la sélection d'une première position (38) et d'une seconde position (39) sur un même axe (X) près d'un bord (121) d'une bride d'extrémité (12) ;
la liaison de bases (4) d'un premier dispositif de charnière (10) et d'un second dispositif de charnière (20) à la bride d'extrémité au niveau de la première position et de la seconde position ;
la liaison d'éléments rotatifs (7) du premier dispositif de charnière et du second dispositif de charnière au couvercle d'extrémité au niveau de la première position et de la seconde position ;
la liaison, à l'aide d'éléments de liaison (91), des bases et éléments rotatifs du premier dispositif de charnière et du second dispositif de charnière ; et
la rotation des éléments rotatifs du premier dispositif de charnière et du second dispositif de charnière ainsi que du couvercle d'extrémité le long dudit même axe pour ouvrir le couvercle d'extrémité,
dans lequel le procédé comprend en outre le passage d'un boulon de butée (92) à travers un trou fileté (422) de la base (4) pour presser contre un bord (121) de la bride d'extrémité (12) ou pour presser contre une ou plusieurs entretoises (93) agencées entre le bord de la bride d'extrémité et la base.

14. Procédé selon la revendication 13, dans lequel l'étape de liaison de l'élément rotatif (7) au couvercle d'extrémité (2) comprend en outre :
le remplacement d'une partie des boulons de montage (31) qui relient le couvercle d'extrémité et la bride d'extrémité par une pluralité de boulons de support (6), et le détachement des boulons de montage restants ;
la translation du couvercle d'extrémité le long de la direction longitudinale des boulons de support par rapport à la bride d'extrémité (12), de sorte qu'un écart entre le couvercle d'extrémité et la bride d'extrémité est supérieur à 1 cm ; et
l'agencement d'écrous (82) dans l'écart et la liaison des éléments rotatifs au couvercle d'extrémité à l'aide de boulons et des écrous.

15. Procédé selon la revendication 13 ou 14, dans lequel le procédé comprend en outre : le verrouillage de la rotation de l'élément rotatif (7) du premier dispositif de charnière (10) et/ou du second dispositif de charnière (20) par rapport à la base (4) après que le couvercle d'extrémité (2) est ouvert de plus de 120 degrés.
